# EUROPEAN PATENT APPLICATION

(11) **EP 1 715 605 A1**
(43) Date of publication of application: **25.10.2006**
(21) Application number: 06252030.9
(22) Date of filing: 12.04.2006
(51) Int. Cl.: H04H 1/00, H04N 5/00

(54) **Broadcast data receiver**

(30) Priority: 19.04.2005 GB 0507946
(71) Applicant: Pace Micro Technology PLC, Shipley, West Yorkshire BD18 3LF (GB)
(72) Inventor: Farrimond, Andrew, Saitaire Shipley BD 18 3LF (GB)
(74) Representative: Tomkinson, Alexandra

(57) **Abstract**

A broadcast data receiver is provided. The receiver includes a base unit, and a mobile unit which is detachably attached to said base unit. The base unit is capable of receiving broadcast data directly from a broadcaster and/or from a set top box communicating therewith. Detection means arc provided in the base unit and/or said mobile unit to detect detachment of said mobile unit from said base unit. Upon or just prior to detachment, said base unit and/or said mobile unit have indication means for providing an indication to a user of one or more events that may be missed following said detachment and/or data relating to the status of said base and/or said mobile units.

## Description

This invention relates to a broadcast data receiver, and particularly but not necessarily exclusively to a broadcast data receiver in the form of a personal video recorder (PVR).

Broadcast data receivers (BDRs) typically receive digital data from a remote location via suitable communication means, such as via cable, satellite and/or terrestrial means. The receiver then decodes and processes said data to provide video, audio and/or auxiliary data for display on a display screen or for sounding via speakers connected to or forming part of the broadcast data receiver. BDRs have memory or storage means to allow received data to be stored therein.

It is known to provide mobile PVR's which include a base unit and mobile unit, the base and mobile units being detachably attached to each other to allow the mobile unit to be transported to any location required by the user. The mobile unit thereby allows video and/or audio data stored thereon to be viewed or listened to at any suitable location chosen by the user, such as a location remote from the location of the base unit. Examples of such units are disclosed in WO2005/024818, EP1494375, US2003/0233663 and WO03/075556.

The base unit can be or form part of a BDR or can be in communication with a BDR, such as a BDR in the form of a set top box provided in user premises. The base unit typically includes a power supply for powering the device, processing means and a front end for processing data received directly from a broadcaster and/or from a BDR in communication therewith. The mobile unit typically includes storage means, such as a hard disk drive, for storing data received from the base unit, processing means for processing the received and stored data, display means for displaying video data and/or speakers for sounding audio data. The mobile unit is detachably attached to the base unit and, when attached, the base and mobile units can communicate with each other, such as for example to allow the base unit to transmit data to the mobile unit for storage on the storage means provided in the mobile unit. The mobile unit has its own power supply, typically in the form of one or more batteries, either rechargeable or otherwise, such that when the mobile unit is detached from the base unit, the mobile unit can operate independently of the base unit.

When the mobile unit is attached to the base unit, the mobile unit can be powered by the base unit and can be updated with data from the base unit as and when required. Thus, the mobile unit is fully charged and up to date when in contact with the base unit. However, once the mobile unit has been separated from the base unit, the batteries of the mobile unit will start to lose their charge and the data stored on the hard disk drive of the mobile unit may become out of date. In addition, if a user has set any recordings to be made by the base unit for storage on the storage means of the mobile unit, these recordings will not be made if the base and mobile units are detached. However, the user is likely to be unaware that these recordings will be missed or have been missed since there is no current means available to inform the user of events that may be missed or of missed event.

It is therefore an aim of the present invention to provide a BDR which overcomes the abovementioned problems.

It is a further aim of the present invention to provide a method of using a BDR which overcomes the abovementioned problems.

According to a first aspect of the present invention there is provided a broadcast data receiver, said receiver including a base unit and a mobile unit which is detachably attached to said base unit, said base unit capable of receiving broadcast data directly from a broadcaster and/or from a further broadcast data receiver communicating therewith, detection means being provided in the base unit and/or said mobile unit to detect detachment of said mobile unit from said base unit, characterised in that upon detection of detachment, said base unit and/or said mobile unit have indication means for providing an indication to a user of one or more events that may be missed following said detachment and/or data relating to the status of said base and/or said mobile units.

The broadcast data receiver typically receives digital data broadcast from a remote location via cable, satellite, terrestrial and/or any other communication means.

In one embodiment the base unit is in the form of a docking station or cradle.

The base unit can receive data directly from a broadcaster located at a remote location and/or can receive data from a further broadcast data receiver (BDR) to which it is in communication with. Thus, for example, the base unit can be connected to or in communication with a set top box in a user's premises or the base unit can communicate with one or more tuners for receiving data directly from a broadcaster.

The broadcast data is typically digital data which is processed by the base unit and/or mobile unit to provide audio, video and/or auxiliary data. The audio, video and/or auxiliary data typically relates to one or more television channels, television programmes.

Preferably the mobile unit can be easily transported and carried a required distance to any suitable location remote from the base unit and/or further broadcast data receiver.

The mobile unit typically includes display means for display of video data and/or speakers for sounding of audio data.

The indication means can include any or any combination of an audio, visual and/or kinaesthetic signal. The audio signal can include one or more alarm, voice and/or the like. The visual signal can include text, one or more images, characters, symbols and/or the like. The process of informing a user of data can be via display on the display means and/or via sounding of audio through the speakers.

The base unit typically has a first power supply. This can be in the form of a mains power supply, battery power supply and/or the like.

The mobile unit is typically powered via the first power supply provided to the base unit when the mobile unit is attached to the base unit. A further independent power supply can be associated with the mobile unit which allows the mobile unit to operate independently of the base unit upon detachment of the mobile unit from the base unit. For example, the further power supply can be one or more batteries and/or connection means to a mains power supply.

The mobile unit includes storage means for storing data received via the base unit. The data is typically transmitted and stored in said storage means when the mobile unit and base unit are attached. This data typically relates to the one or more events that may be missed, such as one or more scheduled recordings and/or the like.

The data transmitted between the base unit and the mobile unit when connected together can relate to any or any combination of information relating to the status of either the base unit and/or mobile unit, scheduled recordings that will be missed or which have been missed during or on detachment of the further mobile unit from the base unit; one or more scheduled downloads of data from a broadcaster, such as for example, data necessary to update the mobile unit with channel information, cost information, advertisements and/or the like, the battery status of the further mobile unit, such as how much charge is in the battery, the length of time the charge in the battery will last for and/or the like; provide information relating to missed events and/or the like.

Preferably the detection means can detect reattachment of the mobile unit to the base unit and, upon said detection, said indication means can provide an indication to a user of one or more events that were missed during said detachment, data relating to the status of said base and/or said mobile units and/or download of the actual data relating to said missed events.

In one embodiment upon detection of detachment of the mobile unit from the base unit, complete separation of said units can be prevented until the indication means have been initiated. Preferably reattachment of the mobile unit to the base unit initiates said indication means.

The detection means can include any wireless or non-wireless detection means to detect engagement or separation of the two units.

Preferably the indication means for informing a user of data relating to the base unit or further mobile unit or missed events is in the form of a software application provided in the base unit and/or mobile unit.

Preferably control means are provided on the base unit and/or mobile unit to allow initiation of the indication means and/or to allow communication therebetween. Operation of these control means can be a requisite for further operation of the base and/or mobile units.

Preferably the base unit and/or mobile unit includes timing means to allow the mobile unit and/or the base unit to determine or calculate the length of time the mobile unit has been detached from the base unit for and therefore to determine one or more functions, such as what programs, data and/or events have been missed by the mobile unit during detachment or to determine or estimate a change in the status of the base unit and/or mobile unit, such as for example, battery status. In one example, the timing means is in the form of a real time clock. Preferably the real time clock is provided in the mobile unit rather than the base unit.

If it is detected that one or more programs, data and/or events have been missed whilst the units have been separated, means can be provided to allow the mobile unit to be updated with the missed programs, data and/or events at the next available opportunity. Thus, for example, one or more recordings can be automatically scheduled or rescheduled by the units. Alternatively, means can be provided to allow a user to be informed of the missed events and the user can then decide whether to select rescheduling of the said missed events.

In one embodiment the further broadcast data receiver is in the form of a set top box.

The base unit can be provided with recording means for recording one or more scheduled events but said unit typically has not storage means or said storage means are too small or insufficient to store data relating to scheduled events. Thus, recorded data is stored directly in the mobile unit when the mobile unit is attached to the base unit or the scheduled events are not recorded if the mobile unit is detached at the relevant schedule time of the scheduled events.

The one or more scheduled recordings and/or events can be set by a user and/or a manufacturer of the further broadcast data receiver and/or base/mobile units. These recordings can be set in a conventional manner.

According to a second aspect of the present invention there is provided a broadcast data receiver system, said system including a first broadcast data receiver for receiving broadcast data from a broadcaster and a second broadcast data receiver communicating with said first broadcast data receiver, said second broadcast data receiver including a base unit and a mobile unit, the further mobile unit being detachably attached to the base unit, detection means being provided in the base unit and/or said mobile unit to detect detachment of said mobile unit from said base unit, characterised in that prior to detachment, said base unit and/or said mobile unit have indication means for providing an indication to a user of one or more events that may be missed following said detachment and/or data relating to the status of said base and/or said mobile units.

Preferably the first broadcast data receiver is in the form of a set top box.

According to separate independent aspects of the present invention there is provided a base unit for use with a further mobile unit; a further mobile unit for use with a base unit.

According to a yet further aspect of the present invention there is provided a method of using a broadcast data receiver, said receiver including a base unit and a mobile unit which is detachably attached to said base unit, said base unit capable of receiving broadcast data directly from a broadcaster and/or from a further broadcast data receiver communicating therewith, said method including the steps of detecting detachment of said mobile unit from said base unit and indicating to a user data relating to one or more events that may be missed following said detachment and/or data relating to the status of said base and/or said mobile units.

The advantages of the present invention are that the user can be kept up to date with the status of the mobile unit and/or data items relating to the mobile unit and/or base unit as soon as detachment or reattachment of the mobile unit with the base unit is detected.

An embodiment of the present invention will now be described with reference to the accompanying figures, wherein:

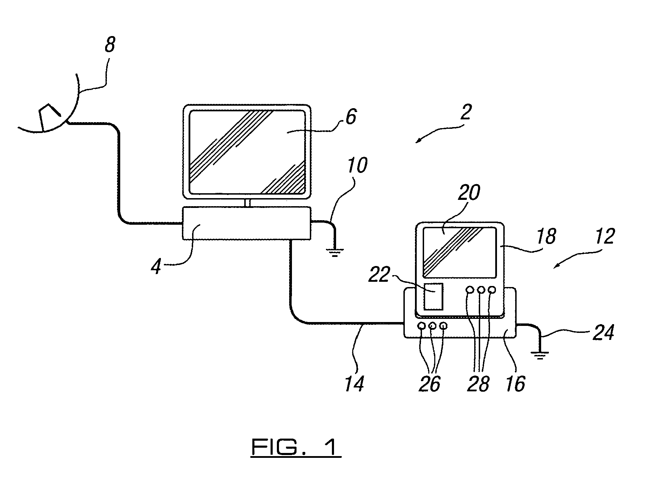

Figure 1 is a schematic view of a broadcast data receiver system according to one embodiment of the present invention.

Referring to the figure, there is illustrated a broadcast data receiver system 2 including a broadcast data receiver in the form of a set top box (STB) 4 which is connected to a display screen 6 in use. The STB receives digital data via a tuner 8 which has been communicated from a broadcaster at a remote location via satellite communication. The digital data is transmitted to processing means of the STB where it is decoded and processed to provide video, audio and/or auxiliary data. The STB 4 has its own power supply 10. The video, audio and/or auxiliary data typically relates to one or more television programs and/or broadcast events.

The STB 4 is provided in a user's premises and a portable PVR 12 is connected to the STB via cable 14. Portable PVR 12 includes a base unit 16 and a further mobile unit 18 which is detachably attached to base unit 14.

The base unit 16 receives digital data from the broadcaster via STB 4 and communicates this data for storage on a hard disk drive (not shown) on mobile unit 18. A display screen 20 and speakers 22 are provided on mobile unit 18 to allow received video data to be displayed and audio data to be sounded thereon respectively. The digital data can relate to any information, such as channel and program information and/or the like.

Base unit 16 is typically connected to a mains power supply 24 and when the mobile unit 18 is attached to base unit 16, the mobile unit typically receives power from power supply 24. However, mobile unit 18 is provided with rechargeable batteries therein which allow independent operation and powering of the mobile unit when detached from the base unit. The rechargeable batteries typically recharge automatically on attachment of the mobile unit with the base unit.

Both the base unit 16 and mobile unit 18 can be operated independently of each other and with respect to set top box 4. As such, the base unit 16 and/or mobile unit 18 can be operated via control means in the form of control buttons 26, 28 provided on said units to allow one or more television programmes to be viewed and/or recorded and stored on one or both of the units.

In order for the mobile unit 18 to receive data from base unit 16, the mobile unit 18 is required to be attached to base unit 16 and a locking mechanism to allow attachment/detachment and communication means to allow communication (not shown) are provided between the same. However, when mobile unit 18 is detached from base unit 16, the mobile unit typically cannot receive data from base unit 16 for the time the units are detached. As such, mobile unit 18 may miss one or more programme recordings that have been set by a user to be recorded via the base unit 16. In addition, the batteries in mobile unit 18 may not have had sufficient time to recharge since the unit 18 was last detached from base unit 16.

Thus, in accordance with the present invention, software means are provided in mobile unit 18 and/or base unit 16 to allow the user to be informed of the power and/or operational status of the units and also to be informed of information relating to one or more events that may be missed or that have been missed upon or during detachment of the units. Timing means in the form of a real time clock is provided in both the base unit and the mobile to allow the duration of detachment of the units from each other to be monitored. When the units are reattached, the time duration of detachment can be compared against a list of events that were programmed to take place during the detachment of the units. This list of events or information relating to one or more of the events can then be informed to the user. The user can be informed via audio indication means sounded via speakers 22, such as a simulated voice message or alarm, or via visual indication means shown via display screen 20, such as a warning message, showing of an icon, provision of a menu to allow a user to select to find out what they have or arc about to miss and/or the like.

Detection means associated with the locking mechanism between the base and mobile units can be provided which initiates the software means upon detection of detachment or reattachment of the units. Thus, for example, detachment of the units may be prevented until a user has been informed of the status of the units and/or events the mobile unit may miss if detached. The missed programmes may cover a pre-determined period of time, such as events pre-set during the next 10 hour time period and/or the like. Once the user has been informed of the events they may miss, the user can then make a decision as to whether to continue to detach the mobile unit from the base unit. A similar mechanism can take place upon reattachment of the units together. The units detect the length of time of separation of the units and then data is transmitted from the base unit to the mobile relating to pre-scheduled or non-scheduled events missed during separation of the units. The user can then make a decision as to whether reset the missed events for a time in the future when the events may be shown again.

Thus, the present invention allows a user to be kept informed of any missed events and/or status of the mobile and/or base unit.

## Claims

1. A broadcast data receiver, said receiver including a base unit and a mobile unit which is detachably attached to said base unit, said base unit capable of receiving broadcast data directly from a broadcaster and/or from a further broadcast data receiver communicating therewith, detection means being provided in the base unit and/or said mobile unit to detect detachment of said mobile unit from said base unit, **characterised in that** upon detection of detachment, said base unit and/or said mobile unit have indication means for providing an indication to a user of one or more events that may be missed following said detachment and/or data relating to the status of said base and/or said mobile units.

2. A receiver according to claim 1 **characterised in that** said one or more events that may be missed include one or more scheduled recordings set in the broadcaster data receiver and/or further broadcast data receiver and/or one or more scheduled downloads of data from a broadcaster.

3. A receiver according to claim 1 **characterised in that** data relating to the status of said base and/or said mobile units includes the battery status of the mobile unit.

4. A receiver according to claim 1 **characterised in that** upon detection of detachment of the mobile unit from the base unit, complete separation of said units is prevented until the indication means have been initiated.

5. A receiver according to claim 1 **characterised in that** said detection means can detect reattachment of the mobile unit to the base unit and, upon said detection, said indication means provides an indication to a user of one or more events that were missed during said detachment, data relating to the status of said base and/or said mobile units and/or download of the actual data relating to said missed events.

6. A receiver according to claim 2 **characterised in that** at the relevant scheduled time, data relating to the one or more scheduled recordings or downloads are transmitted via the base unit or further broadcast data receiver to storage means provided in the mobile unit when the mobile unit is attached to said base unit.

7. A receiver according to claim 1 **characterised in that** the base unit has recording means for recording one or more scheduled events but said base unit has no storage means or said storage means are insufficient to store data contained in said scheduled events, said recorded data being stored in storage means on said mobile unit.

8. A receiver according to claim 1 **characterised in that** the broadcast data is digital data which is processed by the base unit and/or further mobile unit to provide audio, video and/or auxiliary data.

9. A receiver according to claim 8 **characterised in that** the audio, video and/or auxiliary data relate to one or more television programmes and the scheduled recordings are of said one or more television programmes.

10. A receiver according to claim 1 **characterised in that** the mobile unit includes display means for the displa.y of video data.

11. A receiver according to claim 1 **characterised in that** the mobile unit includes speakers for the sounding of audio data.

12. A receiver according to claim 1 **characterised in that** base unit has first power supply means and, when the mobile unit is attached to the base unit, the mobile unit is powered by said first power supply means.

13. A receiver according to claim 12 **characterised in that** the mobile unit has further power supply means which allows said unit to operate independently when the mobile unit is detached from the base unit.

14. A receiver according to claim 13 **characterised in that** the further power supply means is in the form of one or more batteries.

15. A receiver according to claim 1 **characterised in that** control means are provided on the base unit and/or mobile unit to allow the communication of data therebetween.

16. A receiver according to claim 1 **characterised in that** timing means are provided in the base unit and/or mobile unit and are arranged so as to detect or calculate the length of time the mobile unit has been detached from the base unit, said detected or calculated time being used to determine one or more events that were missed during said detachment and/or data relating to the status of said base and/or said mobile units.

17. A receiver according to claim 16 **characterised in that** the timing means is in the form of a real time clock.

18. A receiver according to claim 5 **characterised in that** when it is detected that the mobile unit has missed one or more events during detachment from the base unit, means are provided to allow the mobile unit to be updated with data relating to the missed events or to provide a user with the option of updating the mobile unit with the missed events.

19. A receiver according to claim 1 **characterised in that** the indication means is in the form of a software application.

20. A receiver according to claim 1 **characterised in that** the base unit is in the form of a docking station or cradle.

21. A receiver according to claim 1 **characterised in that** the further broadcast data receiver is in the form of a set top box.

22. A receiver according to claim 1 **characterised in that** the indication means can include any audio, visual and/or kinaesthetic signal.

23. A receiver according to claim 22 **characterised in that** the visual signal includes text and/or one or more images, characters, symbols and/or the like.

24. A receiver according to claim 22 **characterised in that** the audio signal includes an alarm.

25. A broadcast data receiver system, said system including a first broadcast data receiver for receiving broadcast data from a broadcaster and a second broadcast data receiver communicating with said first broadcast data receiver, said second broadcast data receiver including a base unit and a mobile unit, the further mobile unit being detachably attached to the base unit, detection means being provided in the base unit and/or said mobile unit to detect detachment of said mobile unit from said base unit, **characterised in that** upon detection of detachment, said base unit and/or said mobile unit have indication means for providing an indication to a user of one or more events that may be missed following said detachment and/or data relating to the status of said base and/or said mobile units.

26. A system according to claim 22 **characterised in that** the first broadcast data receiver is a set top box.

27. A base unit for use with a mobile unit according to claims 1 or 22.

28. A mobile unit for use with a base unit according to claims 1 or 22.

29. A method of using a broadcast data receiver, said receiver including a base unit and a mobile unit which is detachably attached to said base unit, said base unit capable of receiving broadcast data directly from a broadcaster and/or from a further broadcast data receiver communicating therewith, said method including the steps of detecting detachment of said mobile unit from said base unit and indicating to a user data relating to one or more events that may be missed following said detachment and/or data relating to the status of said base and/or said mobile units.
